Europäisches Patentamt

**European Patent Office**

Office européen des brevets

(19)

(11) Numéro de publication: **0210897**
**B1**

(12) **FASCICULE DE BREVET EUROPEEN**

(45) Date de publication du fascicule du brevet:
25.04.90

(51) Int. Cl.⁴: **B64D 23/00**

(21) Numéro de dépôt: 86401478.2

(22) Date de dépôt: 03.07.86

(54) **Installation pour la commande d'un mouvement gravitaire ou forcé, notamment pour la simulation de saut en parachute.**

(30) Priorité: **17.07.85 FR 8510928**

(43) Date de publication de la demande:
**04.02.87 Bulletin 87/6**

(45) Mention de la délivrance du brevet:
**25.04.90 Bulletin 90/17**

(84) Etats contractants désignés:
**AT BE CH DE GB IT LI LU NL SE**

(56) Documents cités:
**FR-A- 1 027 196**
**FR-A- 2 394 488**
**GB-A- 516 418**
**US-A- 2 593 699**
**US-A- 3 861 318**

**IEEE 1980 IECI PROCEEDINGS, Papers presented at IECI '80, "Application of Mini and Microcomputers", Philadelphia, Pennsylvania, 17-20 mars 1980, The IECI Society, The Computer Society, pages 373-376, IEEE, New York, US; V.P. NELSON et al.: "The Ripcord: A new microprocessor controlled amusement ride" 000**

(73) Titulaire: **BAUDIN-CHATEAUNEUF, B.P. 19,**
**F-45110 Châteauneuf-Sur-Loire(FR)**

(72) Inventeur: **Bories, Jean-Louis, 15, Allée des Sapins,**
**F-45430 Checy(FR)**
Inventeur: **Gibert, Jean-Paul, 17bis, rue du Parc,**
**F-45000 Orleans(FR)**

(74) Mandataire: **Coutel, Jean-Claude, Cabinet AYMARD & COUTEL 20, rue Vignon, F-75009 Paris(FR)**

ACTORUM AG

## Description

L'invention est relative à une installation pour la commande d'un mouvement gravitaire, que ce mouvement se fasse en chute libre, en chute guidée ou en déplacement par roulement ou par glissement sur une rampe à forte inclinaison, ou encore de manière forcée.

L'invention s'applique en particulier, mais de manière non exclusive, à la simulation de saut en parachute.

Par le document GB-A 516 418 on connaît une installation de manutention d'objets qui comporte un rail présentant une partie en descente et une chaîne dont un brin circule parallèlement et en adjacence à cette partie en descente et porte des doigts de retenue de chariots; ces chariots portent chacun un objet à manutentionner et circulent sur le rail depuis un niveau haut jusqu'à un niveau bas en parcourant par gravité la partie en descente du rail. La chaîne est entraînée à vitesse constante, qui est la vitesse des chariots dans la partie en descente du fait du couplage entre les chariots et les doigts de la chaîne.

Par le document US-A 2 593 699 on connaît par ailleurs une installation de manutention de chariots qui circulent sur un rail continu fermé.

L'invention a pour but de fournir une installation du genre indiqué comportant des moyens perfectionnés pour la commande du mouvement des chariots dans la partie active de descente.

A cet effet, l'installation selon l'invention pour la commande de mouvement gravitaire ou forcé, notamment pour la simulation de saut en parachute, comportant un rail principal s'étendant sur une zone de départ du mouvement puis, après une zone de mouvement actif de descente, sur une zone de retour vers la zone de départ, un chariot principal mobile d'accrochage de la charge et circulant librement en circuit fermé sur le rail principal, et des moyens mobiles pour commander dans le temps le mouvement du chariot principal dans la zone active de descente, est caractérisée par le fait que lesdits moyens de commande du chariot principal comportent un élément mobile qui se déplace dans ladite zone active de descente sur un rail auxiliaire, des moyens programmés pour la commande dans le temps du mouvement descendant dudit élément mobile et des moyens de couplage amovible entre le chariot principal et ledit élément mobile; et par le fait que, dans ladite zone active de descente, le rail principal est au moins en partie supprimé, le chariot principal étant solidaire dudit élément mobile dans cette zone.

De préférence, ledit élément mobile est constitué par un chariot d'assistance se déplaçant sur le rail auxiliaire qui s'étend le long de ladite zone active de descente.

Par exemple, l'élément mobile se déplace suivant un mouvement alternatif.

Les moyens programmés peuvent comporter un treuil ou analogue pour la commande du mouvement dudit élément mobile, par un moto-réducteur à vitesse variable programmée, notamment par une servo-vanne, ou par un moteur électrique, sous la commande d'une unité programmée.

Dans un exemple de réalisation, l'installation comporte au moins un organe simulant une partie de carlingue d'avion, par exemple deux demi-maquettes qui se font face et dont les sorties sont reliées par un aiguillage à une même ligne de saut.

On prévoit avantageusement au moins un détecteur du début du mouvement gravitaire, à la sortie dudit organe, pour l'actionnement des moyens programmés.

On comprendra bien l'invention à la lecture de la description qui va suivre et en référence aux dessins annexés dans lesquels:

Fig. 1 est une vue en perspective d'une partie d'une installation selon un mode de réalisation de l'invention;

Fig. 2 est une vue schématique en coupe, et à plus grande échelle, montrant le chariot mobile de support de la charge, le chariot d'assistance, les rails pour les chariots, et les moyens programmés de commande des mouvements du chariot d'assistance; et

Fig.. 3 est une vue d'ensemble d'une installation selon l'invention comportant une ligne de saut et deux demi-maquettes de carlingue d'avion.

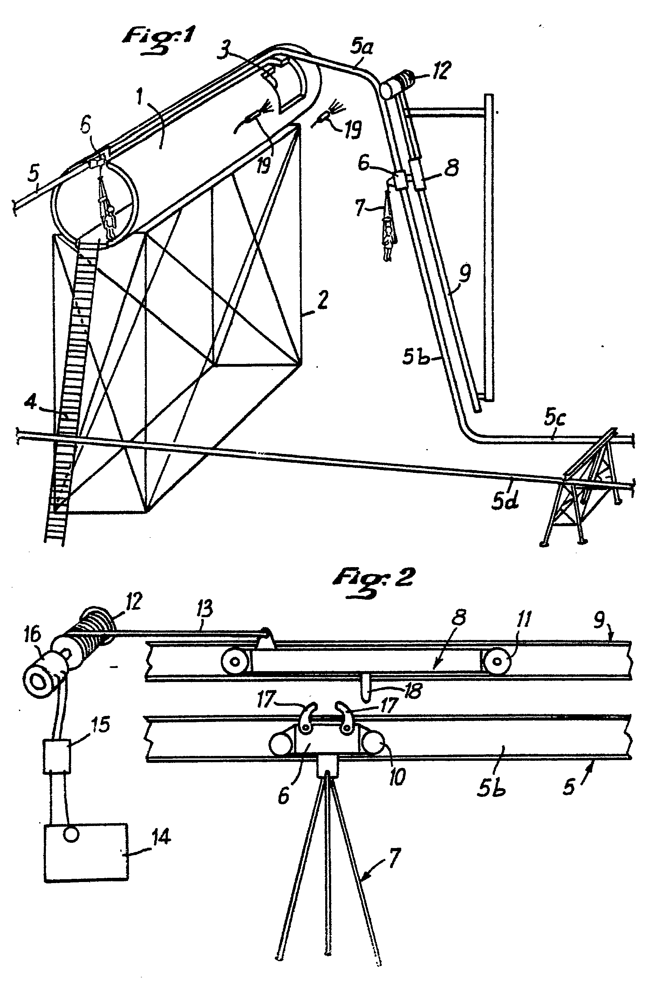

On a représenté sur la Fig. 1 un élément 1 simulant une carlingue d'avion. Cet élément 1 est surélevé par rapport au sol à l'aide d'une structure de support 2. L'élément 1 présente une ouverture de sortie 3 pour un saut en parachute simulé.

L'opérateur peut accéder à l'élément 1 à l'aide d'une échelle 4.

Un rail 5 traverse longitudinalement l'élément de carlingue 1, passe au-dessus de l'ouverture 3 en s'inclinant légèrement en 5a vers le bas, puis l'incline très fortement en 5b pour simuler la phase de saut proprement dite; à la partie 5b fait suite une partie 5c, sensiblement horizontale, pour simuler la descente sous voile et/ou le traînage au sol, ·puis une branche 5d de retour vers l'élément de carlingue 1.

Le rail 5 est destiné à coopérer avec un chariot principal mobile 6 propre à se déplacer sur le rail 5. Quand il est dans l'élément de carlingue 1, l'opérateur s'accroche, de façon connue, au chariot 6 à l'aide d'un harnais 7 qui, par exemple, peut comporter un anneau de cardan permettant de simuler les mouvements produits ou à produire sur les suspentes de parachute.

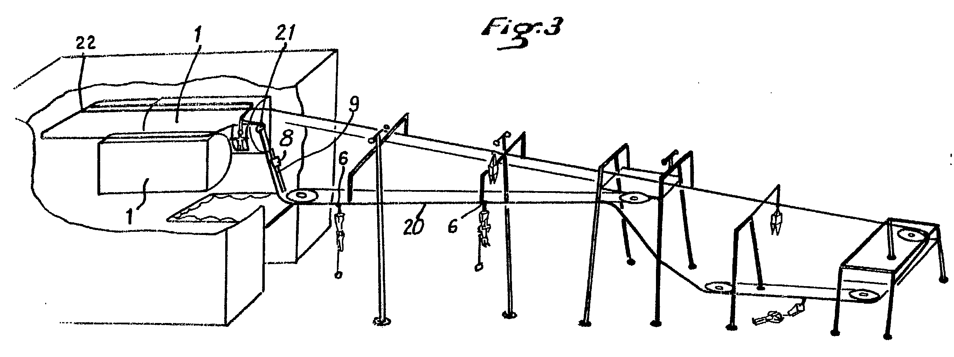

Comme montré sur les Figs. 1 et 2, le chariot 6 est destiné à coopérer avec un chariot d'assistance 8 propre à se déplacer de manière commandée sur un rail 9 qui s'étend parallèlement à la partie 5b du rail 5.

Comme montré sur la Fig. 2, les chariots 6 et 8 se déplacent sur leurs rails 5 et 9 par l'intermédiaire de galets 10 et 11.

Dans le mode de réalisation adopté, le mouvement alternatif du chariot d'assistance 8 sur son rail 9 est commandé par un treuil fixe 12 dont le câble 13 est attelé au chariot 8 et dont la vitesse et le sens de rotation sont commandés par une unité programmée 14 pilotant soit une servo-vanne 15 d'un moteur hydraulique 16, soit un moteur électrique (non représenté) à vitesse variable.

Le couplage et la séparation des deux chariots 6 et 8, aux extrémités du rail 9, sont effectués à l'aide de doigts ou taquets 17, 18 portés respectivement par ces chariots. Du fait que, dans la zone du rail 9, les deux chariots 6 et 8 sont solidaires entre eux, une partie au moins de l'élément de rail 5b est supprimée.

Au voisinage de l'ouverture 3 de l'élément de carlingue 1, on prévoit au moins un détecteur de mouvement 19 pour l'actionnement de l'unité programmée 14.

Le fonctionnement de l'installation selon les Figs. 1 et 2 est le suivant:

Quand l'opérateur est dans l'élément de carlingue 1, il s'accroche par son harnais 7 au chariot 6. Il se déplace dans l'élément de carlingue 1 jusqu'à l'ouverture 3 par laquelle il saute. Le chariot 6 portant l'opérateur passe devant le détecteur 19 qui fait démarrer le cycle de l'unité programmée 14. Le chariot d'assistance 8 étant en position supérieure sur son rail 9, le chariot 6 s'accouple au chariot 8 et descen conjointement avec lui, par effet gravitaire dû au poids du chariot et de l'opérateur, et suivant une loi de mouvement qui est définie par l'unité programmée 14. Quand les deux chariots arrivent à la fin des parties 5b et 9 de rails, les chariots se séparent automatiquement, le chariot 6 poursuit son mouvement sur la partie 5c, pour simuler le traînage au sol, tandis que le chariot d'assistance 8 remonte sur le rail 9, sous la commande de l'unité programmée 14, pour un cycle suivant. Après le traînage, l'opérateur se sépare du chariot 6, lequel est ramené dans l'élément de carlingue 1 par des moyens appropriés.

Dans la variante de la Fig. 3, l'installation comporte deux éléments 1 qui figurent chacun un élément de carlingue et qui se font face par leur sortie.

Il existe une seule ligne de saut 20 alimentée par les deux éléments 1 à l'aide d'un aiguillage 21.

Dans ce mode de réalisation, le rail 9 qui porte le chariot d'assistance 8 est disposé immédiatement après l'aiguillage 21.

La ligne de saut 20 est constituée par un rail qui, après les zones correspondant aux phases effectives de saut, de descente sous voile, d'atterrissage et de traînage au sol, remonte vers les éléments de carlingue 1 pour les alimenter en chariots 6 à travers un aiguillage 22.

Suivant une variante, les moyens programmés pourraient être agencés pour commander le mouvement de déplacement du chariot 6 sur l'intégralité de sa trajectoire fermée, par exemple selon la Fig. 3. De tels moyens à boucle pourraient par exemple être constitués par une chaîne fermée.

Suivant une autre variante, le mécanisme du treuil d'assistance 12 pourrait être embarqué sur le chariot d'assistance 8, sa variation de vitesse étant obtenue par adhérence des roues ou par un système du type à pignon et crémaillère.

Suivant une autre variante encore, les moyens programmés pourraient comporter des moyens moteurs pour créer un mouvement forcé de descente d'accélération supérieure à celle due à la gravité.

## Revendications

1. Installation pour la commande de mouvement gravitaire ou forcé, notamment pour la simulation de saut en parachute, comportant un rail principal (5) s'étendant sur une zone de départ du mouvement puis, après une zone de mouvement actif de descente, sur une zone de retour vers la zone de départ, un chariot principal mobile (6) d'accrochage de la charge et circulant librement en circuit fermé sur le rail principal (5), et des moyens mobiles pour commander dans le temps le mouvement du chariot principal (6) dans la zone active de descente, caractérisée par le fait que lesdits moyens de commande du chariot principal comportent un élément mobile (8) qui se déplace dans ladite zone active de descente sur un rail auxiliaire (9), des moyens programmés (14) pour la commande dans le temps du mouvement descendant dudit élément mobile (8) et des moyens (17, 18) de couplage amovible entre le chariot principal (6) et ledit élément mobile (8); et par le fait que, dans ladite zone active de descente, le rail principal (5) est au moins en partie supprimé, le chariot principal (6) étant solidaire dudit élément mobile (8) dans cette zone.

2. Installation selon la revendication 1, caractérisée par le fait que ledit élément mobile (8) est constitué par un chariot d'assistance se déplaçant sur le rail auxiliaire (9) qui s'étend le long de ladite zone active de descente.

3. Installation selon l'une des revendications 1 et 2, caractérisée par le fait que l'élément mobile (8) se déplace suivant un mouvement alternatif.

4. Installation selon l'une des revendications 1 à 3, caractérisée par le fait que les moyens programmés (14) comportent un treuil (12) ou analogue pour la commande du mouvement de l'élément mobile (8).

5. Installation selon la revendication 4, caractérisée par le fait que le treuil (12) est commandé par un moto-réducteur à vitesse variable programmée, notamment par une servo-vanne, ou par un moteur électrique, sous la commande d'une unité programmée (14).

6. Installation selon l'une des revendications 1 à 5, caractérisée par le fait qu'elle comporte des moyens du type à boucle, notamment à chaîne fermée, pour déplacer le chariot principal (6).

7. Installation selon l'une des revendications 1 à 6, caractérisée par le fait qu'elle comporte au moins un organe (1) simulant une partie de carlingue d'avion.

8. Installation selon la revendication 7, caractérisée par le fait qu'elle comporte deux demi-maquettes qui se font face et dont les sorties sont reliées par un aiguillage (21) à une même ligne de saut (20).

9. Installation selon l'une des revendications 1 à 8, caractérisée par le fait qu'elle comporte au moins un détecteur de début du mouvement gravitaire pour l'actionnement des moyens programmés (14).

10. Installation selon l'une des revendications 1 à 9, caractérisée par le fait que les moyens programmés (14) comportent des moyens pour appliquer au chariot principal (6) une accélération différente de celle de la pesanteur, notamment une accélération supérieure à celle-ci à l'aide de moyens moteurs créant un mouvement forcé.

## Claims

1. Installation for controlling a gravitational or forced movement, notably for the simulation of a parachute jump, comprising a main rail (5) extending at a movement starting zone, then, after an active descent movement zone, over a zone of return toward the starting zone, a movable main carriage (6) for supporting the load and moving freely on main rail (5) along a closed circuit and movable means for timely controlling the movement of the main carriage (6) in the active descent zone, characterized by the fact that said main carriage control means comprise a movable member (8) which moves in said active descent zone on an auxiliary rail (9), programmed means (14) for timely controlling the descending movement of said movable member, and means (17, 18) for separably coupling the main carriage (6) and said movable member (8); and by the fact that, in said active descent zone, the main rail (5) is at least partially omitted, the main carriage (6) being secured to said movable member in that zone.

2. Installation according to claim 1, characterized by the fact that said movable member (8) is constituted by an assisting carriage moving on the auxiliary rail (9) which extends along said active descent zone.

3. Installation according to any of claims 1 and 2, characterized by the fact that the movable member (8) moves with an alternating movement.

4. Installation according to any of claims 1 to 3, characterized by the fact that the programmed means (14) include a winch (12) or similar for controlling the movement of the movable member (8).

5. Installation according to claim 4, characterized by the fact that the winch (12) is controlled by a programmed variable speed geared motor, notably a servo-valve, or by an electric motor, unter the control of a programmed unit (14).

6. Installation according to any of claims 1 to 5, characterized by the fact that it comprises loop type means, notably a closed chain, for moving the main carriage (6).

7. Installation according to any of claims 1 to 6, characterized by the fact that it comprises at least one element (1) simulating a portion of an aircraft cockpit.

8. Installation according to claim 7, characterized by the fact that it comprises two facing half mock-ups of which the outlets are connected by a switch (21) to a same jump line (20).

9. Installation according to any of claims 1 to 8, characterized by the fact that it comprises at least a sensor sensing the beginning of the gravitational movement for actuating the programmed means (14).

10. Installation according to any of claims 1 to 9, characterized by the fact that the programmed means (14) comprise means for applying to the main carriage (6) an acceleration different to that of gravity, notably an acceleration greater than that of gravity, with the assistance of driving means creating a forced movement.

## Patentansprüche

1. Steuerungsanlage für Schwerkraft- oder Zwangsbewegung, insbesondere für Fallschirmsprungsimulation,
mit einer Hauptschiene (5), welche sich über eine Bewegungsanfangszone, dann, nach einer Zone aktiver Abwärtsbewegung, über eine Zone der Rückkehr zur Anfangszone erstreckt,
mit einem beweglichen Hauptwagen (6) zum Anhängen der Last, welcher frei im geschlossenen Kreis auf der Hauptschiene (5) läuft,
und mit beweglichen Mitteln zur zeitlichen Steuerung der Bewegung des Hauptwagens (6) in der Zone aktiver Abwärtsbewegung, dadurch gekennzeichnet,
daß die Mittel zur Steuerung des Hauptwagens ein bewegliches Element (8), welches sich in der Zone aktiver Abwärtsbewegung auf einer Hilfsschiene (9) verschiebt, Mittel (14), welche für die Steuerung während der Zeit der Abwärtsbewegung des beweglichen Elementes (8) programmiert sind, sowie Mittel (17, 18) zur lösbaren Kopplung zwischen dem Hauptwagen (6) und dem beweglichen Element (8) umfassen und
daß die Hauptschiene (5) in der Zone aktiver Abwärtsbewegung zumindest teilweise unterbrochen ist, wobei der Hauptwagen (6) in dieser Zone fest mit dem beweglichen Element (8) verbunden ist.

2. Anlage nach Anspruch 1, dadurch gekennzeichnet, daß das bewegliche Element (8) durch einen Hilfswagen gebildet ist, welcher sich auf der entlang der Zone aktiver Abwärtsbewegung verlaufenden Hilfsschiene (9) verschiebt.

3. Anlage nach einem der Ansprüche 1 und 2, dadurch gekennzeichnet, daß das bewegliche Element (8) sich gemäß einer hin- und hergehenden Bewegung verschiebt.

4. Anlage nach einem der Ansprüche 1 bis 3, dadurch gekennzeichnet, daß die programmierten Mittel (14) eine Winde (12) o.dgl. zur Steuerung der Bewegung des beweglichen Elementes (8) aufweisen.

5. Anlage nach Anspruch 4, dadurch gekennzeichnet, daß die Winde (12) durch einen Getriebemotor mit programmierter, insbesondere durch ein Servoventil, veränderbarer Geschwindigkeit oder durch einen Elektromotor unter der Steuerung einer programmierten Einheit (14) gesteuert wird.

6. Anlage nach einem der Ansprüche 1 bis 5, dadurch gekennzeichnet, daß sie Mittel nach Art eines Umlaufsystems, insbesondere einer geschlossenen Kette, zur Verschiebung des Hauptwagens (6) aufweist.

7. Anlage nach einem der Ansprüche 1 bis 6, dadurch gekennzeichnet, daß sie mindestens ein Organ (1) aufweist, welches einen Teil des Besatzungsraums eines Flugzeuges simuliert.

8. Anlage nach Anspruch 7, dadurch gekennzeichnet, daß sie zwei Halbmodelle aufweist, die einander gegenüberstehen und deren Ausgänge durch eine Verzweigung bzw. Weiche (21) mit ein und derselben Sprunglinie (20) verbunden sind.

9. Anlage nach einem der Ansprüche 1 bis 8, dadurch gekennzeichnet, daß sie mindestens einen Fühler für den Beginn der Schwerkraftbewegung zur Betätigung der programmierten Mittel (14) aufweist.

10. Anlage nach einem der Ansprüche 1 bis 9, dadurch gekennzeichnet, daß die programmierten Mittel (14) zum Anlegen einer von derjenigen der Schwerkraft unterschiedlichen Beschleunigung an den Hauptwagen aufweisen, und zwar insbesondere zum Anlegen einer Beschleunigung, welche größer ist als jene, mit Hilfe von Motormitteln, welche eine Zwangsbewegung erzeugen.

Fig:1

Fig:2

Fig.3